# FASCICULE DE BREVET EUROPEEN

(11) **EP 3 778 336 B1**
(45) Date de publication et mention de la délivrance du brevet: **16.03.2022**
(21) Numéro de dépôt: 20190411.7
(22) Date de dépôt: 11.08.2020
(51) Int. Cl.: B61D 33/00, B60R 7/04, B60N 2/24, B64D 11/06, B60N 2/01

(54) **SIÈGE DE VÉHICULE À ESPACE DE STOCKAGE AMÉLIORÉ ET VÉHICULE ASSOCIÉ**
FAHRZEUGSITZ MIT VERBESSERTEM STAURAUM UND ENTSPRECHENDES FAHRZEUG
VEHICLE SEAT WITH IMPROVED STORAGE SPACE AND ASSOCIATED VEHICLE

(30) Priorité: 12.08.2019 FR 1909151
(43) Date de publication de la demande: 17.02.2021
(73) Titulaire: SpeedInnov, 75008 Paris (FR)
(72) Inventeur: PAILLER, Christophe, 17180 PERIGNY (FR); MARTIN, David, Jérôme, 17220 SAINTE SOULLE (FR)
(74) Mandataire: Lavoix

(56) Documents cités:
- EP-A1- 2 727 791
- EP-A2- 1 266 790
- US-A- 4 577 907
- US-A- 4 732 359
- US-A- 5 655 816

## Description

La présente invention concerne un siège de véhicule.

Il est connu de placer des sièges dans les compartiments des véhicules destinés à accueillir des passagers, afin de leur permettre de s'assoir pour rendre leur voyage plus agréable. Cela est notamment le cas pour les véhicules destinés à effectuer des trajets de moyenne ou longue durée, comme des véhicules ferroviaires ou routiers, ainsi que pour des véhicules maritimes ou aériens.

La conception des compartiments passagers nécessite de prendre en compte à la fois l'espace occupé par les sièges des passagers et les espaces destinés aux bagages de ces passagers, en prévoyant des espaces destinés à leur stockage pour la durée du voyage.

Les bagages sont généralement classifiés en deux catégories : les bagages volumineux, nécessitant un espace de rangement spécifique, et les bagages cabine, de plus petites dimensions, destinés à être rangés à proximité du passager.

Notamment, il est connu de prévoir des porte-bagages disposés au-dessus des sièges, pour accueillir les bagages cabine des passagers.

Cependant, ces espaces de stockage de bagages peuvent encore être améliorés.

En effet, ces porte-bagages en partie haute de la cabine sont généralement gênants pour les passagers qui se lèvent. De plus, il est parfois difficile de rangers des bagages très lourds dans un porte-bagage situé en hauteur. En outre, ces bagages peuvent tomber et mettre en danger les passagers.

Enfin, dans le cas des véhicules à deux étages ou plus, la hauteur sous plafond est restreinte, ce qui rend difficile de placer un porte-bagage au-dessus des sièges passagers.

Il est connu des documents US 5 655 816 A1, EP 2 727 791 A1 et EP 1 266 790 A2 d'installer un siège de véhicule comprenant une assise, un dossier et un pied en trois segments.

Un but de l'invention est ainsi de fournir un espace de stockage de bagages minimisant l'espace occupé dans le compartiment, d'accès simplifié et sécurisé, et qui soit compatible avec les véhicules à deux étages.

A cet effet, l'invention a pour objet un siège selon la revendication 1.

Un tel siège permet de disposer d'un espace de rangement sous l'assise adapté pour recevoir un bagage cabine, sans gêne supplémentaire pour l'occupant du siège ou ses voisins. De plus, le bagage ainsi rangé est facilement accessible et ne pose aucun risque de chute. Enfin, un tel rangement des bagages permet de dégager de l'espace sous le plafond en supprimant la nécessité d'avoir un porte-bagage au-dessus du siège, et est particulièrement adapté aux véhicules à plusieurs niveaux.

Selon des modes de réalisation particuliers, le siège selon l'invention présente l'une ou plusieurs des caractéristiques des revendications 2 à 8 et suivantes, prise(s) isolément ou selon toute combinaison techniquement réalisable :
- le pied est constitué d'un matériau composite comprenant des fibres de carbone.

L'invention a également pour objet un véhicule, notamment ferroviaire, selon la revendication 9.

Selon un mode de réalisation particulier, le véhicule selon l'invention présente la caractéristique de la revendication 10.

L'invention sera mieux comprise à la lecture de la description qui va suivre, donnée uniquement à titre d'exemple et faite en se référant aux dessins annexés, parmi lesquels :
- [Fig 1] la figure 1 est une vue coupe transversale d'un véhicule selon l'invention ;
- [Fig 2] la figure 2 est une vue latérale de deux sièges selon un premier mode de réalisation de l'invention :
- [Fig 3] la figure 3 est une vue latérale de deux sièges selon un deuxième mode de réalisation de l'invention ; et
- [Fig 4] la figure 4 est une vue latérale d'un siège selon un troisième mode de réalisation de l'invention.

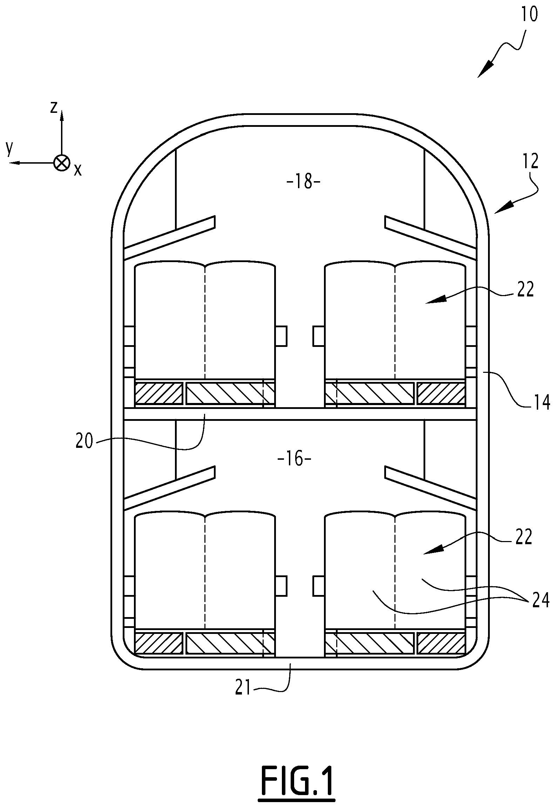

Un véhicule 10 ferroviaire est représenté sur la figure 1, comprenant une voiture 12 à deux niveaux.

Dans tout ce qui suit, il est fait référence à une direction longitudinale X s'étendant sensiblement selon la direction de déplacement normale du véhicule 10, une direction transversale Y orthogonale à la direction longitudinale X et sensiblement horizontale, et une direction d'élévation Z sensiblement verticale, comme représenté sur la figure 1.

De plus, dans tout ce qui suit, par les termes « sensiblement selon une direction », « sensiblement parallèle » et « sensiblement perpendiculaire », on entend respectivement « selon une direction », « parallèle à » et « perpendiculaire à » à 10° près, et notamment à 5° près.

La voiture 12 comprend une caisse 14 délimitant un niveau inférieur 16 et un niveau supérieur 18 séparés par un plancher intermédiaire 20 du niveau supérieur 18. La caisse 14 définit également un plancher inférieur 21 pour le niveau inférieur 16.

Chacun du niveau inférieur 16 et du niveau supérieur 18 comprend une cabine destinée à accueillir des passagers, chaque cabine comprenant des sièges 22 destinés à permettre aux passagers de voyager assis.

Selon le mode de réalisation de la figure 1, chaque siège 22 de la cabine définit au moins deux emplacements 24 de réception propres à accueillir un passager assis.

Selon un autre mode de réalisation, au moins un des sièges 22 définit un unique emplacement 24 propre à accueillir un passager assis, notamment la moitié des sièges 22 compris dans la cabine.

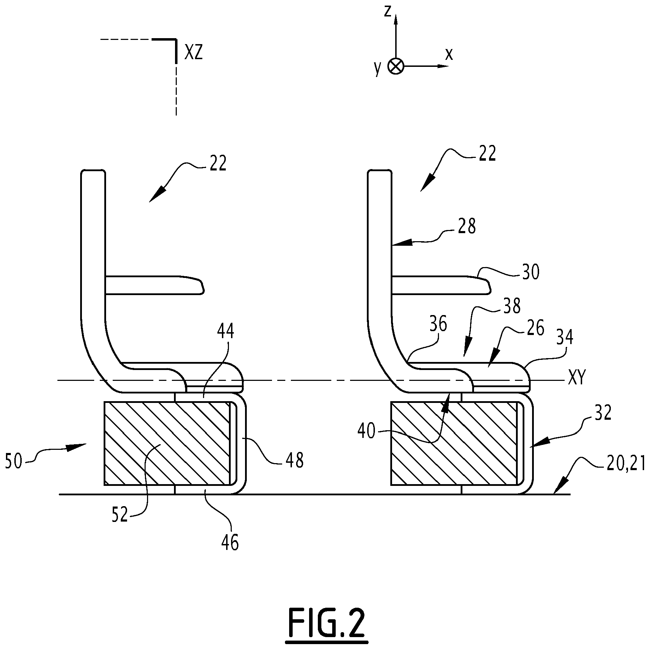

Comme représenté sur la figure 2, chaque siège 22 comprend une assise 26 définissant une surface d'assise, un dossier 28, au moins un accoudoir 30 et au moins un pied 32.

L'assise 26 s'étend sensiblement dans un plan XY parallèle à la direction longitudinale X et à la direction transversale Y. L'assise 26 présente un bord avant 34 et un bord arrière 36 espacés l'un de l'autre relativement à la direction longitudinale X, deux bords latéraux espacés l'un de l'autre relativement à la direction transversale Y, ainsi qu'une face supérieure 38 et une face inférieure 40 espacées l'une de l'autre relativement à la direction d'élévation Z.

Le dossier 28 est solidaire de l'assise 26, au voisinage du bord arrière 36. Le dossier 28 est sensiblement plan et forme un angle avec le plan XY de l'assise 26, par exemple compris entre 75° et 90°.

Le ou chaque accoudoir 30 est fixé au dossier 28 et/ou à l'assise 26, de manière fixe ou mobile en rotation autour d'un axe parallèle à la direction transversale Y. Chaque accoudoir 30 est par exemple disposé au voisinage d'un bord transversal d'un emplacement 26 selon la direction longitudinale X.

Selon une première variante, le siège 22 comprend un pied 32 au voisinage de chacun des bords latéraux de l'assise 26.

Selon une autre variante, le siège 22 comprend un unique pied 32 au voisinage d'un des bords latéraux de l'assise 26 et est fixé directement à une paroi de la caisse 14 par un organe de fixation disposé au voisinage de l'autre bord latéral de l'assise 26.

Chaque pied 32 est solidaire de la face inférieure 40 de l'assise 26 et du plancher 20, 21 correspondant, de manière à supporter l'assise 26.

Le pied 32 comprend un premier segment 44 et un deuxième segment 46 s'étendant tous deux sensiblement selon la direction longitudinale X, et un troisième segment 48 s'étendant sensiblement selon la direction s'élévation Z.

Le premier segment 44 et le deuxième segment sont espacés l'un de l'autre selon la direction d'élévation Z et sont joints l'un à l'autre par le troisième segment 48, .

Avantageusement, les segments 44, 46, 48 de chaque pied 32 sont agencés de manière à former un profil en C dans un plan XZ parallèle à la direction longitudinale X et à la direction d'élévation Z.

Le pied 32 est réalisé à partir d'un matériau rigide, par exemple en métal, notamment en acier, ou avantageusement à partir d'un matériau composite comprenant des fibres de carbone.

Avantageusement, le premier segment 44, le deuxième segment 46 et le troisième segment 48 sont venus de matière les uns avec les autres. Par exemple, dans le mode de réalisation de la figure 2, le pied 32 est formé par pliage d'une barre ou d'un profilé rectiligne pour former le premier segment 44, le deuxième segment 46 et le troisième segment 48.

Le premier segment 44 est fixé à la face inférieure 40 de l'assise 26 et le deuxième segment 46 est fixé au plancher de la cabine, par exemple par soudage lorsque les matériaux respectifs du pied 32, du plancher 20, 21 et de l'assise 26 le permettent. En variante, le premier segment 44 est fixé à l'assise 26 au moyen d'organes de fixation comme des vis ou des rivets, ou collé à l'assise 26, et le deuxième segment 46 est fixé au plancher 20, 21 par des organes de fixation similaires, ou soudé.

Ainsi, le siège 22 définit avec le plancher de la cabine un logement 50 s'étendant entre la face inférieure 40 de l'assise 26 et le plancher 20, 21, le logement 50 étant apte à recevoir au moins un bagage cabine 52.

Le troisième segment 48 du pied 32 forme une butée de fond du logement 50, qui limite la profondeur du logement 50 et ainsi limite la largeur du bagage cabine 52 reçu dans le logement 50. Ainsi, le bagage cabine 52 ne dépasse pas du bord avant 34 selon la direction longitudinale X.

Avantageusement, le troisième segment 48 s'étend à une distance supérieure ou égale à 350 mm du bord arrière 36 de l'assise 26, la distance étant mesurée selon la direction longitudinale X, dans le plan XZ parallèle à la direction longitudinale X et à la direction d'élévation Z.

Ainsi, le logement 50 présente une profondeur, mesurée selon la direction longitudinale X, supérieure ou égale à 350 mm. Le logement 50 est alors apte à recevoir le bagage cabine 52 sans que celui-ci dépasse de plus de 100 mm du bord arrière 36 de l'assise 26 selon la direction longitudinale X.

Avantageusement, le dépassement du bagage cabine 52 du bord arrière 36 est nul.

Le troisième segment 48 présente une longueur supérieure ou égale à 250 mm, la longueur du troisième segment 48 étant mesurée selon la direction d'élévation Z, dans le plan XZ, entre le premier segment 44 et le deuxième segment 46.

Avantageusement, chacun des segments 44, 46, 48 du pied 32 présente une épaisseur selon la direction transversale Y supérieure ou égale à la longueur du troisième segment 48, afin que le pied 32 présente une rigidité importante pour le confort des passagers.

Le positionnement du troisième segment 48 est tel que le logement 50 est accessible depuis l'arrière du siège 22. Le logement 50 est alors destiné à recevoir le bagage 52 du passager occupant le siège 22 situé derrière celui définissant le logement 50.

Par un bagage cabine, on entend que le bagage 52 présente une longueur inférieure ou égale à 550 mm, une largeur inférieure ou égale à 350 mm et une hauteur inférieure ou égale à 250 mm.

Plus généralement, le logement 50 est adapté pour recevoir au moins autant de bagages cabine que le siège 22 comporte d'emplacements.

Par exemple, dans le cas où le siège 22 définit deux emplacements 24, le logement 50 est apte à recevoir deux bagages cabine 52.

Comme représenté sur la figure 1, lorsque la largeur du siège 22 est trop faible pour permettre l'arrangement des bagages 52 dans le même sens, notamment si le siège 22 est de type deuxième classe et comprend un unique pied 32, les deux bagages cabine 52 sont arrangés en L. On entend par là que le bagage 52 le plus proche du pied 32 est disposé avec sa longueur sensiblement selon la direction transversale Y tandis que le deuxième bagage 52, voisin des parois de la caisse 14, est disposé avec sa longueur sensiblement selon la direction longitudinale X.

En variante, lorsque la largeur du siège 22 selon la direction transversale Y le permet, notamment si le siège 22 est de type première classe, les deux bagages cabine 52 sont arrangés dans le même sens, avec la longueur de chaque bagage 52 orientée sensiblement selon la direction transversale Y.

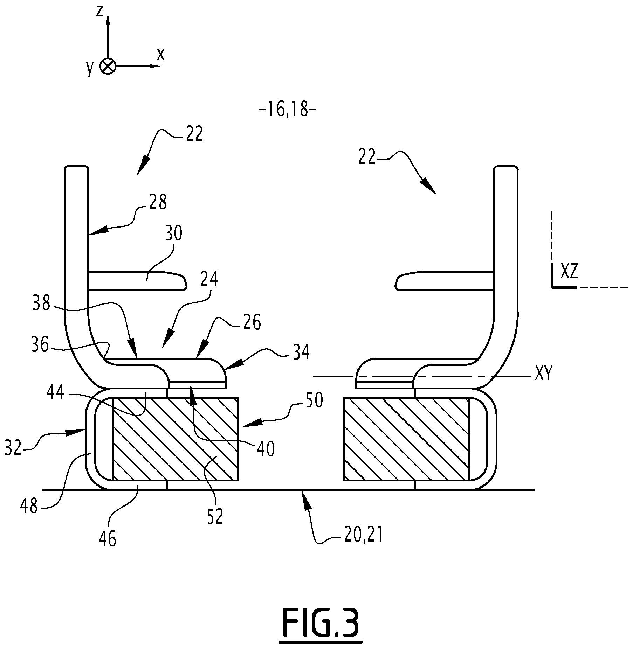

Un siège 22 selon un deuxième mode de réalisation est représenté sur la figure 3. Le siège 22 selon le deuxième mode de réalisation est identique au siège 22 selon le premier mode de réalisation décrit plus haut, les éléments correspondants portant les mêmes références, à l'exception de ce qui suit.

Dans ce deuxième mode de réalisation, le pied 32 est agencé de façon à ce que le logement 50 soit accessible depuis l'avant du siège 22. Le logement 50 est alors destiné à recevoir le bagage 52 du passager occupant le siège 22 définissant le logement 50.

Avantageusement, le troisième segment 48 s'étendent à une distance supérieure ou égale à 350 mm du bord avant 34 de l'assise 26, la distance étant mesurée dans le plan XZ parallèle à la direction longitudinale X et à la direction d'élévation Z.

Le logement 50 présente ainsi une profondeur adaptée pour recevoir le bagage cabine 52 sans que celui-ci ne dépasse de manière excessive du bord avant 34 du siège 22 selon la direction longitudinale X. Le dépassement maximal du bagage cabine 52 est inférieur à 100 mm, et avantageusement le dépassement du bagage cabine 52 est nul.

Le pied 32 forme une butée de fond du logement 50, de sorte que le bagage 52 ne dépasse pas non plus du bord arrière 36 de l'assise 26 selon la direction longitudinale X.

Le siège 22 selon ce mode de réalisation est avantageux dans le cas de sièges 32 disposés en face-à-face, comme représenté sur la figure 3, afin de permettre aux voyageurs les occupant de disposer d'un espace de rangement dédié.

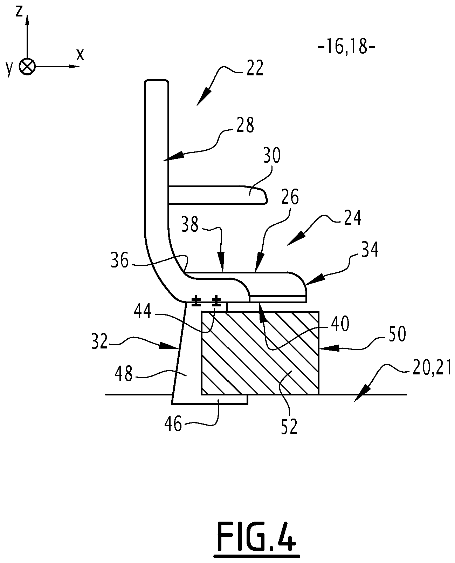

Un siège 22 selon un troisième mode de réalisation est représenté sur la figure 4. Le siège 22 selon le troisième mode de réalisation est identique au siège 22 selon le premier mode de réalisation décrit plus haut, les éléments correspondants portant les mêmes références, à l'exception de ce qui suit.

Le pied 32 comprend un troisième segment 48 présentant une section transversale, dans un plan horizontal XY dont la surface augmente en allant du premier segment 44 au deuxième segment 46. Le pied 32 est typiquement réalisé par soudage des trois segments 44, 46, 48 les uns avec les autres, ou par moulage, en fonction du matériau composant le pied 32.

Le pied 32 est fixé à la face inférieure 40 de l'assise 26 par des organes de fixation, par exemple des boulons.

Le pied 32 selon le mode de réalisation de la figure 4 présente une raideur plus importante, et donc une stabilité améliorée, ainsi qu'une résistance mécanique supérieure. Il est par contre plus complexe à confectionner que les variantes décrites plus haut.

Selon des variantes non représentées, le véhicule 10 est un véhicule routier, par exemple un car, notamment un car à deux niveaux, ou encore un véhicule maritime ou aérien.

Le siège 22 selon l'invention permet de réduire l'encombrement sous le siège 22, ce qui permet d'utiliser le volume compris entre l'assise 26 et le plancher 20, 21 pour stocker des bagages. Cela permet de libérer de l'espace destiné au stockage des bagages ailleurs dans le véhicule d'augmenter le nombre d'emplacements destinés aux passagers, ce qui est souhaitable dans tout type de véhicule, et notamment dans les cabines de type deuxième classe.

Le stockage par un passager de son bagage 52 sous le siège 22 permet de plus de le surveiller facilement pendant le voyage, et le bagage 52 peut être fixé simplement au pied 32, au moyen d'un simple antivol, par exemple pendant les déplacements du passager.

## Revendications

1. Siège (22) de véhicule (10), comprenant :
- une assise (26), présentant un bord avant (34) et un bord arrière (36) espacés l'un de l'autre selon une direction longitudinale (X) et délimitant une surface d'assise, ainsi qu'une face supérieure (38) et une face inférieure (40) espacées l'une de l'autre selon une direction d'élévation (Z),
- un dossier (28) solidaire de l'assise (26) au voisinage du bord arrière (36), et
- au moins un pied (32) supportant l'assise (26), le pied (32) comprenant au moins trois segments (44, 46, 48), parmi lesquels :
- un premier segment (44), s'étendant sensiblement selon la direction longitudinale (X), fixé à la face inférieure (40) de l'assise (26),
- un deuxième segment (46), s'étendant sensiblement selon la direction longitudinale (X), destiné à être fixé à un plancher (20, 21) de cabine de véhicule (10) espacé du premier segment selon la direction d'élévation (Z), et
- un troisième segment (48), s'étendant sensiblement selon la direction d'élévation (Z) joignant le premier segment (44) et le deuxième segment (46),
le troisième segment (48) étant agencé pour que le pied (32) soit propre à définir, avec un plancher (20, 21), un logement (50) s'étendant entre la face inférieure (40) de l'assise (26) et le plancher (20, 21),
le logement (50) étant apte à recevoir au moins un bagage cabine (52) présentant une longueur égale à 550 mm, une largeur égale à 350 mm et une hauteur égale à 250 mm manière à ce que le bagage cabine (52) ne dépasse pas de plus de 100 mm du bord avant (34) ni du bord arrière (36) de l'assise (26), selon la direction longitudinale (X),
**caractérisé en ce que**
le pied (32) forme une butée de fond du logement (50), de sorte que le bagage (52) ne dépasse pas du bord arrière (36) de l'assise (26), selon la direction longitudinale (X) ou **en ce que** le pied (32) forme une butée de fond du logement (50), de sorte que le bagage (52) ne dépasse pas du bord avant (34) de l'assise (26), selon la direction longitudinale (X).

2. Siège selon la revendication 1, dans lequel le troisième segment (48) s'étend à une distance supérieure ou égale à 350 mm du bord avant (34) ou du bord arrière (36) de l'assise (26), la distance étant mesurée selon la direction longitudinale (X), dans un plan (XZ) parallèle à la direction longitudinale (X) et à la direction d'élévation (Z), le troisième segment (48) présentant avantageusement une longueur mesurée selon la direction d'élévation (Z) supérieure ou égale à 250 mm.

3. Siège (22) selon la revendication 1 ou 2, dans lequel les segments (44, 46, 48) du pied sont agencés de manière à former un profil en C dans le plan (XZ) parallèle à la direction longitudinale (X) et à la direction d'élévation (Z).

4. Siège (22) selon l'une quelconque des revendications 1 à 3, dans lequel le siège (22) comprend un unique pied (32) situé au voisinage d'un premier bord latéral de l'assise (26) selon une direction transversale (Y), le siège (22) étant agencé pour être fixé à une caisse (14) de véhicule (10) au voisinage d'un deuxième bord latéral de l'assise (26), le premier bord latéral et le deuxième bord latéral joignant les bords avant (34) et arrière (36) de part et d'autre de la surface d'assise.

5. Siège (22) selon l'une quelconque des revendications 1 à 4, dans lequel le siège (22) définit au moins deux emplacements (24), chaque emplacement (24) étant propre à accueillir un passager assis.

6. Siège (22) selon la revendication 5, dans lequel le logement (50) est apte à recevoir au moins autant de bagages cabine (52) que le siège (22) est apte à accueillir de passagers.

7. Siège (22) selon la revendication 6, dans lequel le logement (50) est apte à recevoir au moins un des bagages (52) orienté avec sa hauteur selon la direction longitudinale (X) et au moins un autre des bagages (52) orienté avec sa hauteur selon une direction transversale (Y).

8. Siège (22) selon l'une quelconque des revendications 1 à 7, dans lequel le troisième segment (48) du pied (32) présente une section transversale, dans un plan horizontal (XY), dont la surface augmente en allant du premier segment (44) au deuxième segment (46) du pied (32).

9. Véhicule (10), notamment ferroviaire, comprenant au moins une cabine, la cabine comprenant une pluralité de sièges (22) selon l'une quelconque des revendications 1 à 8.

10. Véhicule (10) selon la revendication 9, dans lequel le véhicule (10) comprend au moins une voiture (12) à plusieurs niveaux, chaque niveau (16, 18) comprenant une cabine.

## Patentansprüche

1. Sitz (22) für ein Fahrzeug (10), umfassend:
- eine Sitzfläche (26), die eine Vorderkante (34) und eine Hinterkante (36), die in einer Längsrichtung (X) voneinander beabstandet sind und eine Sitzfläche begrenzen, sowie eine Oberseite (38) und eine Unterseite (40), die in einer Erhebungsrichtung (Z) voneinander beabstandet sind, aufweist,
- eine Rückenlehne (28), die in der Nähe der Hinterkante (36) fest mit der Sitzfläche (26) verbunden ist, und
- mindestens einen Fuß (32), der die Sitzfläche (26) trägt,
der Fuß (32) umfassend mindestens drei Segmente (44, 46, 48), darunter:
- ein erstes Segment (44), das sich im Wesentlichen in der Längsrichtung (X) erstreckt und an der Unterseite (40) der Sitzfläche (26) befestigt ist,
- ein zweites Segment (46), das sich im Wesentlichen in der Längsrichtung (X) erstreckt und dazu bestimmt ist, an einem Boden (20, 21) einer Fahrzeugkabine (10) befestigt zu werden, das in der Höhenrichtung (Z) von dem ersten Segment beabstandet ist, und
- ein drittes Segment (48), das sich im Wesentlichen entlang der Erhebungsrichtung (Z) erstreckt, das das erste Segment (44) und das zweite Segment (46) verbindet,
wobei das dritte Segment (48) angeordnet ist, damit der Fuß (32) geeignet ist, zusammen mit einem Boden (20, 21) eine Aufnahme (50) zu definieren, die sich zwischen der Unterseite (40) der Sitzfläche (26) und dem Boden (20, 21) erstreckt,
wobei die Aufnahme (50) geeignet ist, mindestens ein Kabinengepäckstück (52) aufzunehmen, das eine Länge gleich 550 mm, eine Breite gleich 350 mm und eine Höhe gleich 250 mm aufweist, sodass das Kabinengepäckstück (52) in der Längsrichtung (X) nicht mehr als 100 mm über die Vorderkante (34) und die Hinterkante (36) der Sitzfläche (26) hervorsteht,
**dadurch gekennzeichnet, dass** der Fuß (32) einen Bodenanschlag der Aufnahme (50) bildet, sodass das Gepäckstück (52) nicht über die Hinterkante (36) der Sitzfläche (26) in der Längsrichtung (X) hervorsteht, oder dass der Fuß (32) einen Bodenanschlag der Aufnahme (50) bildet, sodass das Gepäckstück (52) nicht über die Vorderkante (34) der Sitzfläche (26) in der Längsrichtung (X) hervorsteht.
oder dass der Fuß (32) einen Bodenanschlag der Aufnahme (50) bildet, sodass das Gepäckstück (52) in der Längsrichtung (X) nicht über die Vorderkante (34) der Sitzfläche (26) hervorsteht.

2. Sitz nach Anspruch 1, wobei sich das dritte Segment (48) in einem Abstand größer als oder gleich wie 350 mm von der Vorderkante (34) oder der Hinterkante (36) der Sitzfläche (26) erstreckt, wobei der Abstand in Längsrichtung (X) in einer Ebene (XZ) parallel zu der Längsrichtung (X) und zu der Erhebungsrichtung (Z) gemessen wird, wobei das dritte Segment (48) vorteilhafterweise eine in Erhebungsrichtung (Z) gemessene Länge größer als oder gleich wie 250 mm aufweist.

3. Sitz (22) nach Anspruch 1 oder 2, wobei die Segmente (44, 46, 48) des Fußes angeordnet sind, um in der Ebene (XZ) parallel zu der Längsrichtung (X) und zu der Erhebungsrichtung (Z) ein C-förmiges Profil zu bilden.

4. Sitz (22) nach einem der Ansprüche 1 bis 3, wobei der Sitz (22) einen einzigen Fuß (32) umfasst, der sich in der Nähe eines ersten Seitenrands der Sitzfläche (26) in einer Querrichtung (Y) befindet, wobei der Sitz (22) angeordnet ist, um an einer Karosserie (14) eines Fahrzeugs (10) in der Nähe einer zweiten Seitenkante der Sitzfläche (26) befestigt zu werden, wobei die erste Seitenkante und die zweite Seitenkante die Vorderkante (34) und die Hinterkante (36) auf beiden Seiten der Sitzfläche verbinden.

5. Sitz (22) nach einem der Ansprüche 1 bis 4, wobei der Sitz (22) mindestens zwei Plätze (24) definiert, wobei jeder Platz (24) geeignet ist, einen Passagier sitzend aufzunehmen.

6. Sitz (22) nach Anspruch 5, wobei die Aufnahme (50) geeignet ist, mindestens so viel Kabinengepäck (52) aufzunehmen, wie der Sitz (22) Passagiere aufnehmen kann.

7. Sitz (22) nach Anspruch 6, wobei die Aufnahme (50) geeignet ist, mindestens eines der Gepäckstücke (52), das mit seiner Höhe in der Längsrichtung (X) ausgerichtet ist, und mindestens ein weiteres der Gepäckstücke (52), das mit seiner Höhe in einer Querrichtung (Y) ausgerichtet ist, aufzunehmen.

8. Sitz (22) nach einem der Ansprüche 1 bis 7, wobei das dritte Segment (48) des Fußes (32) in einer horizontalen Ebene (XY) einen Querschnitt aufweist, dessen Fläche von dem ersten Segment (44) zu dem zweiten Segment (46) des Fußes (32) zunimmt.

9. Fahrzeug (10), insbesondere Schienenfahrzeug, umfassend mindestens eine Kabine, die Kabine umfassend eine Vielzahl von Sitzen (22) nach einem der Ansprüche 1 bis 8.

10. Fahrzeug (10) nach Anspruch 9, wobei das Fahrzeug (10) mindestens einen Wagen (12) mit mehreren Ebenen umfasst, jede Ebene (16, 18) umfassend eine Kabine.

## Claims

1. A vehicle (10) seat (22), comprising:
- a seat bottom (26), having a front edge (34) and a rear edge (36) spaced apart from one another along the longitudinal direction (X) and delimiting a seat bottom surface, as well as an upper face (38) and a lower face (40) spaced apart from one another along an elevation direction (Z),
- a backrest (28) secured to the seat bottom (26) near the rear edge (36), and
- at least one leg (32) supporting the seat bottom (26),
the leg (32) comprising at least three segments (44, 46, 48), including:
- a first segment (44), extending substantially in the longitudinal direction (X), fastened to the lower face (40) of the seat bottom (26),
- a second segment (46), extending substantially in the longitudinal direction (X), intended to be fastened to a vehicle cabin (10) floor (20, 21)spaced apart from the first segment in the elevation direction (Z), and
- a third segment (48), extending substantially in the elevation direction (Z) joining the first segment (44) and the second segment (46),
the third segment (48) being arranged so that the leg (32) is able to define, with a floor (20, 21), a housing (50) extending between the lower face (40) of the seat bottom (26) and the floor (20, 21),
the housing (50) being able to accommodate at least one piece of carry-on luggage (52) having a length of less than or equal to 550 mm, a width of less than or equal to 350 mm and a height of less than or equal to 250 mm, such that the carry-on luggage (52) does not exceed 100 mm from the front edge (34) or the rear edge (36) of the seat bottom (26), in the longitudinal direction (X),
**characterized in that** the leg (32) forms a bottom stop of the housing (50), such that the carry-on luggage (52) does not protrude from the rear edge (36) of the seat bottom (26) along the longitudinal direction (X), or the leg (32) forms a bottom stop of the housing (50), such that the carry-on luggage (52) does not protrude from the front edge (34) of the seat bottom (26) along the longitudinal direction (X).

2. The seat according to claim 1, wherein the third segment (48) extends at a distance greater than or equal to 350 mm from the front edge (34) or the rear edge (36) of the seat bottom (26), the distance being measured in the longitudinal direction (X), in a plane (XZ) parallel to the longitudinal direction (X) and the elevation direction (Z), the third segment (48) advantageously having a length measured in the elevation direction (Z) greater than or equal to 250 mm.

3. The seat (22) according to claim 1 or 2, wherein the segments (44, 46, 48) of the leg are arranged so as to form a C-shaped profile in the plane (XZ) parallel to the longitudinal direction (X) and the elevation direction (Z).

4. The seat (22) according to any one of claims 1 to 3, wherein the seat (22) comprises a single leg (32) located near a first side edge of the seat bottom (26) in a transverse direction (Y), the seat (22) being arranged to be fastened to a vehicle (10) body (14) near a second side edge of the seat bottom (26), the first side edge and the second side edge joining the front (34) and rear (36) edges on either side of the seat bottom surface.

5. The seat (22) according to any one of claims 1 to 4, wherein the seat (22) defines at least two locations (24), each location (24) being able to accommodate a seated passenger.

6. The seat (22) according to claim 5, wherein the housing (50) is able to receive at least as many pieces of carry-on luggage (52) as the seat (22) is able to accommodate passengers.

7. The seat (22) according to claim 6, wherein the housing (50) is able to receive at least one of the luggage items (52) oriented with its height along the longitudinal direction (X) and at least one other of the luggage items (52) oriented with its height along a transverse direction (Y).

8. The seat (22) according to any one of claims 1 to 7, wherein the third segment (48) of the leg (32) has a cross-section, in a horizontal plane (XY), whose surface increases going from the first segment (44) to the second segment (46) of the leg (32).

9. A vehicle (10), in particular a rail vehicle, comprising at least one cabin, the cabin comprising a plurality of seats (22) according to any one of claims 1 to 8.

10. The vehicle (10) according to claim 9, wherein the vehicle (10) comprises at least one car (12) with several levels, each level (16, 18) comprising a cabin.
